# EUROPEAN PATENT APPLICATION

(11) **EP 2 336 898 A1**
(43) Date of publication of application: **22.06.2011**
(21) Application number: 09812663.4
(22) Date of filing: 10.09.2009
(51) Int. Cl.: G06F 17/21

(54) **METHOD AND SYSTEM FOR PROCESSING ELECTRONIC DATA**

(30) Priority: 10.09.2008 CN 200810222174; 16.01.2009 CN 200910001286
(71) Applicant: Sursen Corp., Beijing 100089 (CN)
(72) Inventor: WANG, Donglin, Beijing 100089 (CN)
(74) Representative: Barth, Stephan Manuel
(86) International application number: PCT/CN2009/073850
(87) International publication number: WO 2010/028597

(57) **Abstract**

Embodiments of the present invention provide a method and a system for processing electronic data. The method includes receiving a create instruction and storing data for editing specified in the create instruction and data for presenting corresponding to the data for editing dependently to form mixed data. Through the technical solution of the embodiments of the present invention which stores the data for editing and the data for presenting dependently, information can be better presented in various scenarios, and edit operation is facilitated, which makes data more usable.

## Description

### FIELD OF THE INVENTION

The present invention relates to file processing techniques, and more particularly, to a method and a system for processing electronic data.

### BACKGROUND OF THE INVENTION

With the development of digitization, electronic file plays an important role in various fields such as scientific research, manufacture, everyday life and even military affairs, etc. There are various types of electronic file, e.g. audio file, video file and document (DOC, PDF) file, etc.

When creating a file, editing software (such as Office) may firstly be used for generating the file, and then the file edited may be converted into a file for presenting. For example, where a file for presenting and a file for editing are both documents, the generating of a Portable Document Format (PDF) file from a DOC file is just a process of generating a file for presenting from a file for editing, with the PDF file being the file for presenting and the DOC file being the file for editing.

Likewise, where both the file for presenting and the file for editing are video files, the generating of a Shackwave File (SWF) from a FLASH (FLA) file is also a process of generating a file for presenting from a file for editing, with the FLA file being the file for editing and the SWF file being the file for presenting.

Where both the file for presenting and the file for editing are audio files, the generating of a Waveform Audio Format (WAF) file from a Musical Instrument Digital Interface (MIDI) file is also a process of generating a file for presenting from a file for editing, with the MIDI file being the file for editing and the WAV file being the file for presenting.

Generally, the file for editing is a file ready to be edited, such as a DOC file, a FLA file and a MIDI file, etc. The file for presenting is generally prepared for being viewed, saved and listened to, etc., and is usually not editable, such as documents stored in a docbase, PDF files, SWF files and WAV files, etc. In practical applications, a file for presenting may be converted from different files for editing. For example, a document stored in a docbase may be generated from both a DOC file and an EXCEL file.

The file for presenting usually has better adaptability, and its format is more widely used. The file for presenting can provide identical presentation effect under different computer environments, thus is more suitable for file exchanging than the file for editing. But the file for presenting is usually not suitable for editing. If a receiver wants to edit a file he/she received, the edit will be hard to be implemented when the file is a file for presenting.

In the prior art, people usually exchange data for editing or data for presenting. When only the data for editing is exchanged, the software for editing the data is required to be installed at the receiving side for recognizing the data for editing. This manner lacks adaptability and can not guarantee the same presentation effects of the data. When only the data for presenting is exchanged, the receiver has to seek help from the party who possesses corresponding data for editing when the receiver wants to edit the data for presenting, which is very inconvenient and the party who possesses the data for editing may not be found if the data for presenting has been re-transmitted for many times.

### SUMMARY OF THE INVENTION

Embodiments of the present invention provide a method and a system for processing electronic data, so as to make it convenient for a receiver of the electronic data to present and process the electronic data.

According to a first objective, the technical solution provided by the embodiments of the present invention is as follows:

A method for processing electronic data includes:
receiving a create instruction, storing data for editing specified in the create instruction and data for presenting corresponding to the data for editing dependently to form mixed data.

According to a second objective, the technical solution provided by the embodiments of the present invention is as follows:

A system for processing electronic data includes an editing apparatus, a converting apparatus and a generating apparatus; wherein
the editing apparatus is adapted to edit and generate data for editing;
the converting apparatus is adapted to convert the data for editing generated by the editing apparatus into data for presenting; and
the generating apparatus is adapted to generating mixed data including the data for editing and the data for presenting which are stored dependently.

It can be seen from the above technical solution that, in the method and system for processing electronic data provided by the embodiments of the present invention, the data for editing and the data for presenting are stored dependently to form the mixed data. Thus, when electronic data is exchanged, what is exchanged is the mixed data. Therefore, a receiver can not only obtain an accurate presentation effect according to the data for presenting in the mixed data but also can modify the data for editing in the mixed data and update the data for presenting synchronously when modification is required.

### BRIEF DESCRIPTION OF THE DRAWINGS

**FIG.1** is a flowchart illustrating a method for processing electronic data according to an embodiment of the present invention.
**FIG.2** is a schematic illustrating a storage manner of document data conforming to a docbase standard according to an embodiment of the present invention.
**FIG.3** is a flowchart illustrating a method provided by embodiment one of the present invention.
**FIG.4** is a flowchart illustrating a method provided by embodiment two of the present invention.
**FIG.5** is a schematic illustrating a data storage manner in a storage area storing data for editing according to embodiment two of the present invention.
**FIG.6** is a schematic illustrating a tree storage structure of a docbase after dependent storing according to embodiment two of the present invention.
**FIG.7** is a flowchart illustrating a method provided by embodiment three of the present invention.
**FIG.8** is a schematic illustrating a structure of a system for processing electronic data according to an embodiment of the present invention.

### DETAILED DESCRIPTION OF THE INVENTION

The present invention will be described in further detail with reference to accompanying drawings and embodiments to make the technical solution and merits therein clearer.

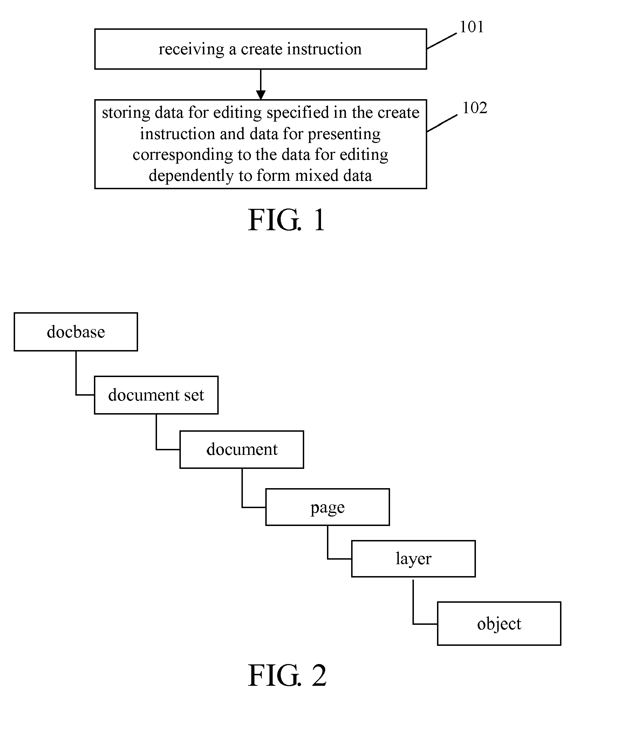

**FIG.1** is a flowchart illustrating a method for processing electronic data according to an embodiment of the present invention. As shown in **FIG.1**, the method may include steps as follows.

Step 101, a create instruction is received.

In practical applications, the create instruction may be sent out by a user via a computer or be sent out by an external device. The manner can be selected according to the needs.

Step 102, data for editing designated in the create instruction and data for presenting corresponding to the data for editing are stored dependently to form mixed data.

In the present invention, the data for presenting is generated from the data for editing. For example, an editing software has a function of converting the data for editing into the data for presenting. In this case, the editing software may directly generate the data for presenting when the data for editing is being edited. For another example, in case that the editing software does not have the function of converting the data for editing into the data for presenting or does not use this function after the data for editing is edited, the data for editing may be converted into the data for presenting by a dedicated converting software. Herein, the converting software is dedicated software capable of converting the data for editing into the data for presenting. For example, Acrobat Distiller is one of such converting software. In addition, the data for presenting in the present invention may be treated as a whole unit or be divided into several parts but at least one part has corresponding data for editing.

In the present invention, it is required that the data for presenting and the data for editing have basically the same presentation effects. But they are not required to be absolutely the same. Some minor differences may not affect the usage. For example, there may be 1/1000 differences in coordinates or colors due to different calculation accuracy and data compression loss, but those differences may be too subtle to be perceived and thus will not affect the usage. According to practical needs, the differences may be required to be small than a pre-defined threshold. The method for evaluating the presentation effect differences between the data for editing and the data for presenting may be determined based on the type of the electronic data. For example, if the electronic data is document data, bitmaps corresponding to displaying results of the data for editing and the data for presenting may be compared. The simplest method is as follows: calculating a difference between corresponding pixels of two bitmaps, adding up the differences of all pixels, then performing the calculating again after adjusting relative positions of the two bitmaps, and selecting a minimum value among all the results calculated according to different relative positions. For another example, if the electronic data is audio or video data, the data for presenting and the data for editing may be sampled at the same time intervals. Thus, the differences between the presentation effects of the data for presenting and the data for editing may be determined by comparing corresponding sampled values. In addition, corresponding manners may be adopted for other types of electronic data to compare the difference between the data for presenting and the data for editing, and thus will not be described further herein.

The dependent storing in the present invention may be implemented in following manners.
1) Store the data for editing and corresponding data for presenting in the same file. For example, embed the data for editing into corresponding data for presenting; or, embed the data for presenting into corresponding data for editing; or, combine the data for editing and corresponding data for presenting to generate a new file, e.g., place the data for editing at the head or tail of the data for presenting to combine the data for editing and the data for presenting; or, embed the data for editing and corresponding data for presenting into another file, e.g., embed the data for editing and corresponding data for presenting into the same compressed file at the same time.

No matter which of the above manners is adopted, if a user needs to edit the data when data for presenting is being presented, the data for editing can be directly retrieved according to the data for presenting and be edited. Then the data for presenting may be updated based on the newly-edited data for editing to achieve the purpose of editing.
2) Store the data for editing and corresponding data for presenting into the same database. For example, the data for editing and corresponding data for presenting may be stored respectively into different fields of the same record in the database; or, the data for editing and corresponding data for presenting may be store in different records having the same keyword in the database.

No matter which of the above manners is adopted, if the user needs to edit the data when the data for presenting is being presented, the data for editing corresponding to the data for presenting can be obtained through an operation of the database, e.g., obtaining the data for editing from another field of a record where the data for presenting is stored, or, searching for multiple records according to a configured keyword to find out the record storing the data for editing among the multiple records, and obtaining the data for editing. Obviously, it is easier to obtain the data for editing corresponding to the data for presenting through the operation of the database to achieve the purpose of subsequent operations such as editing and modifying.
3) Store the data for editing and corresponding data for presenting in storage positions having a pre-defined relationship. For example, the data for editing and corresponding data for presenting may be stored in the same file directory or in different file directories pre-defined; or, when the data for editing and corresponding data for presenting are stored, the data for editing and the data for presenting may have respective file names sharing a same part, e.g. the file name of the data for editing and the file name of the data for presenting are the same except the suffixes.

No matter which of the above manners is adopted, although the data for editing and corresponding data for presenting are neither in the same file nor in the same database, the storage positions have pre-defined relationships. Therefore, the data for editing corresponding to the data for presenting can be obtained easily according to the pre-defined relationship, so as to enable subsequent operations such as modifying the data for presenting. The details of the pre-defined relationships between the storage positions may be determined by those utilizing the technical solution of the present invention and will not be described herein.
4) Dependently store the storage positions of the data for editing and corresponding data for presenting. For example, the storage positions of the data for editing and corresponding data for presenting may be stored in the same file or in the same database. Herein, the method of recording in the same file or in the same database is similar with that in the above manners except that the recorded is not the data for editing and the data for presenting but the storage positions of the data for editing and the data for presenting. Thus, the data can be obtained as long as the storage position of the data is found out. The details will not be repeated herein.

In the present invention, after generating the mixed data through steps 101 and 102, the method may further include: receiving a presence instruction, presenting all or part of the data for presenting in the mixed data using a presenting software. In other words, although the data for editing in the mixed data can also be used for presenting, it is usually better to present the data for presenting when the data needs to be presented. Herein, the presenting software may be selected according to the type of the data for presenting. For example, if the data for presenting is in a PDF format, Acrobat software may be selected as the presenting software. Or, multiple software capable of presenting the data for presenting may be determined, and one of the multiple software may be designated as the presenting software in advance. Or, the presenting software can be designated by a designating instruction, and the data for presenting is presented by the presenting software indicated in the designating instruction. Or, if there are multiple software capable of presenting the data for presenting, the software is allowed to be registered and the software registered in advance is chosen as the presenting software. Or, the system may select a software as the presenting software according to configurations of the system. Or, the presenting software may be designated by the user. In whichever situation, a software can be determined as the presenting software when the data for presenting needs to be presented.

In the present invention, after the mixed data is generated in steps 101 and 102, the method may further include: receiving an edit instruction, editing all or part of the data for editing in the mixed data using an editing software. In other words, if the user needs to edit the data, it is usually better to edit the data for editing corresponding to the data for presenting because the data for presenting is generally not suitable for editing. The editing software may be selected according to the type of the data for editing. If the data for editing is in an ODF format, Open Office software may be selected as the editing software. Or, multiple software capable of editing the data for editing may be determined, and one of the software may be designated as the editing software in advance. Or, if multiple software can edit the data for editing, the software may be allowed to be registered and the software which has registered in advance may be chosen as the editing software. Or, the system may select a certain software as the editing software according to configurations of the system. Or, the editing software may be designated by the user. Thus, in whichever situation, a certain software can be determined as the editing software when the data for editing needs to be edited.

After the data for editing in the mixed data is edited, the method may further include the following steps: receiving an update instruction, generating new data for presenting corresponding to new data for editing after being edited, updating the data for editing in the mixed data with the new data for editing, and updating the data for presenting in the mixed data to generate the new data for presenting. When the data for editing in the mixed data is updated utilizing the new data for editing, only the part of the data for editing containing modifications in the mixed data may be updated. Similarly, when updating the data for presenting in the mixed data utilizing new data for presenting, only the part of the data for presenting containing modifications in the mixed data may be updated. That is, several combinations may be adopted for updating the data for editing and the data for presenting as follows. First, update only the part of the data for editing containing modifications in the mixed data, and update only the part of the data for presenting containing modifications in the mixed data. Second, update only the part of the data for editing containing modifications in the mixed data, and update all the data for presenting in the mixed data. Third, update all the data for editing in the mixed data, and update only the part of the data for presenting containing modifications in the mixed data. Fourth, update all the data for editing in the mixed data and all the data for presenting in the mixed data.

No matter which of the above manners is adopted, the data for editing and corresponding data for presenting can be updated, and the user is enabled to perform subsequent operations such as editing and modifying the data for presenting.

Before the data for editing or the data for presenting in the mixed data is edited, the mixed data may be parsed to obtain the data for editing and/or the data for presenting.

In the present invention, the data for editing and the data for presenting may include any one or any combination of the following according to their types: two-dimensional static information, multi-dimensional static information, audio information, video information, touch information and taste information.

The two-dimensional static information in the data for presenting may include layout document data, image data, etc. The layout document data may include PDF data, or SEP data, or CEB data, or WDL data, or XML Paper Specification (XPS) data, or document data accessible via a docbase standard interface, e.g., document data accessible via an Unstructured Operation Markup Language (UOML) standard. The image data may include Tagged Image File (TIF) data, or Graphics Interchange Format (GIF) data, or Portable Network Graphic Format (PNG) data, or BMP data, or Joint Photographic Experts Group (JPEG) data, or JPEG 2000 data, or Joint Bi-level Image Experts Group (JBIG) data or JBIG 2 data, etc. Accordingly, the two-dimensional static information in the data for editing may include Office document data, or CAD-Computer Aided Design (CAD) data or map data.

The audio information in the data for presenting may include MP3 data, or WAV data, or SWF data, etc. The audio information in the data for editing may include MIDI data, etc.

The video information in the data for presenting may include MPEG data, or AVS data, etc. The video information in the data for editing may include FLA data, etc.

The data for presenting and the data for editing in the present invention may also be other types of data.

In order to make the technical solution of the present invention better understood, some embodiments are given hereinafter.

In embodiments of the present invention, suppose the data for presenting is document data conforming to the docbase standard, such as document data accessible via the UOML standard, and the data for editing is office document data. Herein, the UOML standard is a docbase interface standard which is an interface standard via which an application software accesses a platform software such as the docbase system. In order to make the embodiments clearer, the docbase system is briefly introduced hereinafter.

The docbase system is a platform software which provides functions such as storing, reading/writing, parsing, presenting, organizing, managing, safe-keeping and searching, etc., with respect to unstructured documents (also referred to as unstructured data or unstructured information). The docbase system also provides a standard interface to be called by an application software. The standard interface is referred to as a docbase standard interface, and the standard of the interface is referred to as a docbase system interface standard, shortened as docbase system standard, or docbase interface standard or docbase standard (e.g. UOML standard), etc. Data stored in a docbase system is referred to as a docbase, i.e., data accessible via the docbase standard interface. The data is also referred to as document(s) conforming to the docbase standard. An unstructured document processed by the docbase system may include plane media information comprising one or more pages, and may also include stream media information such as audio and video, or other information. The application software may call the docbase system by sending a pre-defined instruction to the docbase system. The instruction may be sent via a cluster of commands or by calling a function or in other manners. The pre-defined instruction is irrelevant to the storage manner (especially the storage format) of the unstructured document. The pre-defined instruction describes an operation to an instance of an abstract model. The abstract model is obtained by abstracting a universal character (e.g. presentation effect) of a certain type of unstructured document (e.g. paper document, audio/video, 3D model). Instances of a model are usually arranged in a tree structure. Preferably, the pre-defined instruction may be defined based on the operation and the object. After receiving an operation instruction, the docbase system maps the abstract operation to the instance of the model described by the operation instruction onto an actual operation (referred to as a physical operation) to data stored, and executes the physical operation. The docbase system usually has complete functions, and is capable of generating unstructured documents having universal characters with arbitrary legal values. For example, if the universal character is the presentation effect and the unstructured document is a paper document, documents with arbitrary layout features may be generated (minor differences generated from reasons such as compression and data accuracy are neglected). The docbase system may run in a stand-alone mode or on a server, or may be constructed in a Client/Server (C/S) manner for being called by client software. The docbase system in the C/S manner may include a client software and a server software. The server software is capable of managing data storage and the client software is capable of providing a standard calling interface.

The docbase standard provides application software with key techniques (i.e. the docbase system) for processing unstructured document, which enables software producers not having the key techniques to develop software handling the unstructured document. Thus, industry separation of key techniques and application techniques is realized. Meanwhile, different kinds of software supporting the docbase standard can call the same docbase system to process the same unstructured document. And the same software can also call different docbase systems to process different formats of unstructured documents. Thus, interoperability is realized, and it is also good for intercommunication of information. More details can be obtained from patent application CN 1979472 and US 12/133280 previously filed by the applicant.

In this embodiment, the document data conforming to the docbase standard may be arranged in a tree-shaped storage manner as shown in **FIG.2****.** As shown in **FIG2**, a document in the docbase is stored in the form of nodes including docbase, document set, document, page, layer and object. For example, each document set is a document set node, each document in the document set is a document node under the document set node level, each page in the document is a page node under the document node level, and so on. Thus, the document is stored as nodes in a tree structure. **FIG.2** is only one manner for expressing the hierarchical structure. In practical applications, the docbase may include multiple document sets, one document set may include multiple documents, one document may include multiple pages, one page may include multiple layers, and one layer may include multiple layout objects (such as characters, figures, etc.).

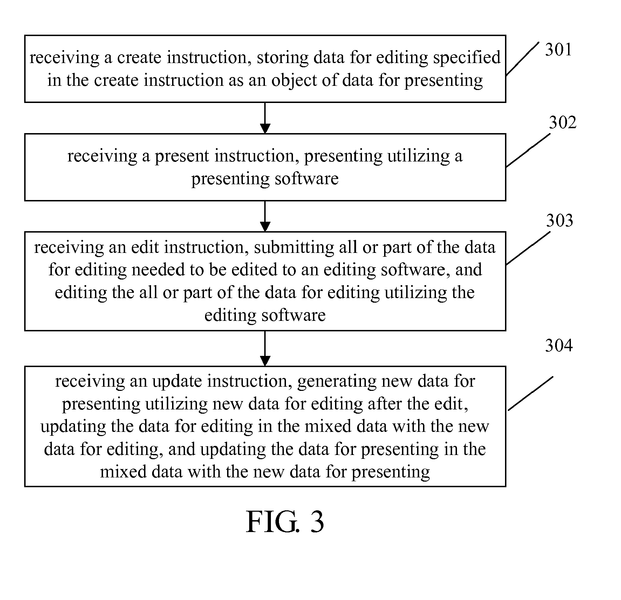

**FIG.3** is a flowchart illustrating a method according to this embodiment. As shown in **FIG.3**, the method may include steps as follows.

Step 301, the docbase system receives a create instruction from am application software, and stores data for editing in the create instruction as an object of data for presenting.

In this embodiment, the data for presenting is document data conforming to the docbase standard. The storage format of the data for presenting is shown as FIG.2. If the data for editing is stored as one or more objects of the data for presenting, the data for editing can be embedded into the data for presenting to enable dependent storing of the data for editing and the data for presenting to generate mixed data. In practical applications, the data for editing may correspond to a document, or several pages of a document, or a certain layer in several pages of a document, or an object flow, i.e. a series of objects, or a layout object of the data for presenting. In one embodiment of the present invention, when the data for editing corresponds to a layer of several pages of a document of the data for presenting, the docbase system may store the data for editing as an sub-object of a document object of the document conforming to the docbase standard and record the layer and the page of the document to which each page of the data for editing corresponds.

When the data for presenting is to be presented or modified, the following steps may be executed.

Step 302, a presence instruction is received, and a presenting software presents the data for presenting.

In particular, in this embodiment, the presenting software may transmit a read instruction to the docbase system, retrieve part of data specified in the presence instruction, parse and process the data to perform display/print operations. The presenting software may also directly transmit a page bitmap obtaining instruction to the docbase system to obtain a page bitmap of a specified page and then display/print the page bitmap. After this step, the user is able to browse the data for presenting. If operations such as editing and modifying the mixed data are needed, the following steps may be executed.

Step 303, the docbase system receives an edit instruction, submits all or part of the data for editing required to be edited to an editing software and the editing software edits the data for editing.

The data for editing may correspond to a document, or to a page, or to a layer, or to an object flow or to a layout object presented. The data for editing needing to be edited should be firstly obtained according to the edit instruction, and then be opened and edited via the editing software.

Step 304, the docbase system receives an update instruction, generates new data for presenting corresponding to the new data for editing after the editing, updates the data for editing in the mixed data utilizing the new data for editing and updates the data for presenting in the mixed data utilizing the new data for presenting.

In this step, supposing the data for editing corresponds to a layer of the data for presenting, during the update, all objects of the layer of the data for presenting corresponding to the data for editing may be deleted, and the new data for editing is embedded, and new layout objects corresponding to the new data for editing are created in the layer of the data for presenting. Therefore, the update of the data for editing in the mixed data utilizing the new data for editing and the update of the data for presenting in the mixed data utilizing the new data for presenting are implemented, and the editing and modifying of the mixed data is achieved.

In this embodiment, the document data is taken as an example. In practical applications, other types of data, such as audio data and video data are also applicable.

### Embodiment two

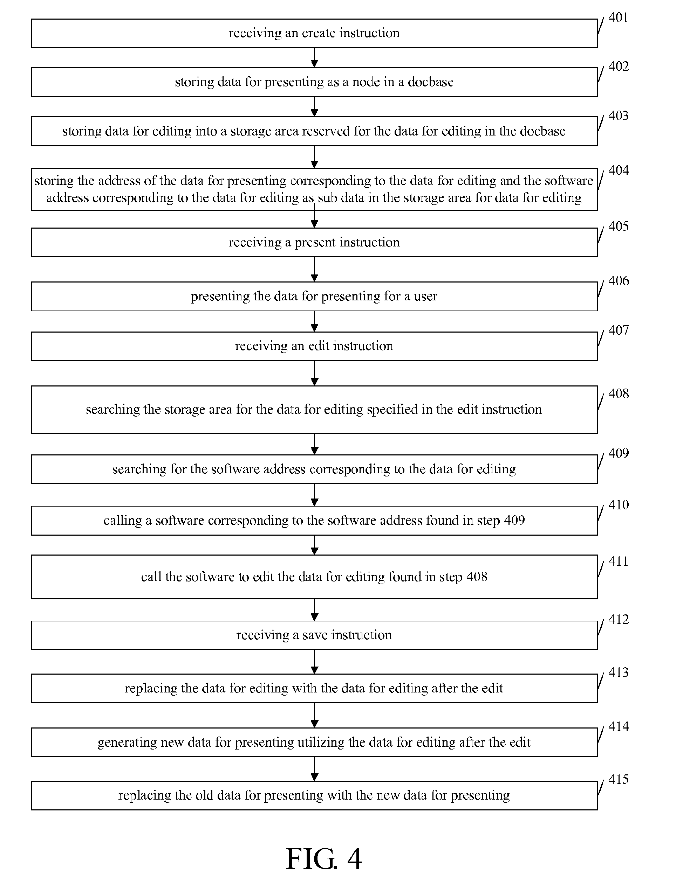

In this embodiment, the storage manner of the document data has a similar structure with the tree structure shown in **FIG.2** and will not be repeated herein. **FIG.4** is a flowchart illustrating a method according to embodiment two of the present invention. As shown in **FIG.4**, the method may include steps as follows.

Step 401, a create instruction is received.

Step 402, data for presenting is stored as a sub-tree in the docbase.

This step is a procedure of storing a document into the docbase.

Step 403, data for editing is stored in a sub-tree in the docbase.

Step 404, an index of the data for presenting corresponding to the data for editing and a software linkage corresponding to the data for editing are stored as sub-data of the data for editing.

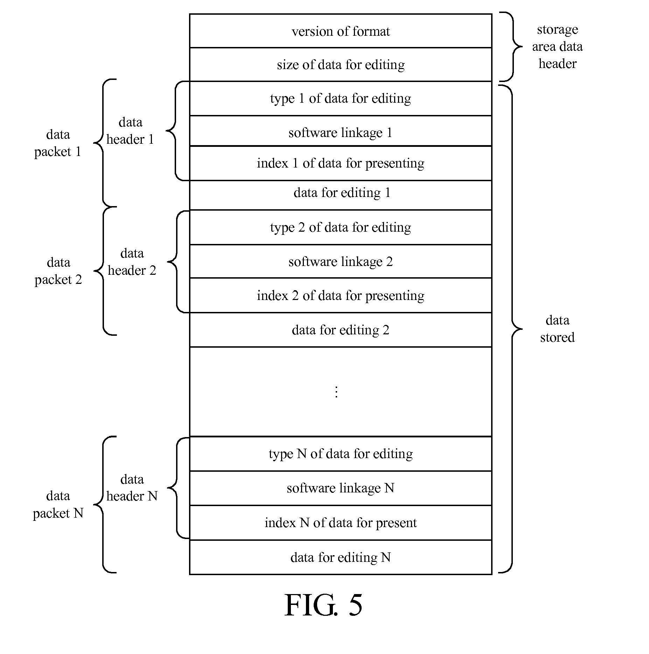

As shown in **FIG.5**, the sub-tree for storing the data for editing may include only one node, and the contents stored may include a storage area data header and data stored.

The storage area data header may include a format version and the size of the data for editing. The storage area data header is for managing all data for editing in the storage area storing data for editing and describing the size of the data for editing included in a file for editing corresponding to the storage area. The data stored includes data packets, and each data packet stores all information related to the data for editing.

The data packet of the data for editing may include two parts: a data header and the data for editing.

The data header may include: type of the data for editing, an index of the data for presenting corresponding to the data for editing and a software linkage corresponding to the data for editing. The software corresponding to the data for editing is the software which has registered in advance and is allowed to edit the data for editing. The type of data for editing may be a format of the data for editing, e.g. DOC file or EXCEL file, etc.

The index of the data for presenting corresponding to the data for editing and the software linkage corresponding to the data for editing may be stored as sub-data of the data for editing.

In **FIG.5**, supposing there are data packets of N data for editing, each data packet stores the data for editing and the sub-data of the data for editing.

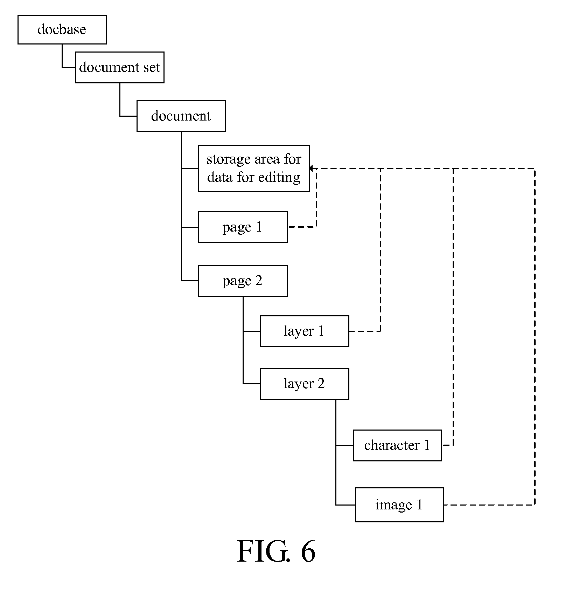

Through the steps 402-404, the data for editing and the data for presenting are stored dependently. After the data for editing and corresponding data for presenting are stored dependently, the storage structure in the docbase is as shown in **FIG.6**.

In **FIG.6**, an address of each data for editing in the storage area storing data for editing is associated with a storage address of the data for presenting corresponding to the data for editing. Thus, after the specified data for editing is found out, corresponding data for presenting and software can also be found out. The data for editing corresponding to the data for presenting and the software corresponding to the data for editing can also be found out through the data for presenting.

Step 405, a present instruction is received.

Step 406, the software corresponding to the data for presenting specified in the presence instruction is called to present the data for presenting for the user using the software.

In this step, the document in the docbase needs to be read out, the software specified in the presence instruction is called to send a read instruction to the docbase to retrieve data in the node specified in the read instruction and display the retrieved data in a bitmap manner for the user to browse.

Step 407, an edit instruction is received.

In this step, a user interaction interface may be provided in advance. The user interaction interface receives the edit instruction from the user after the data for presenting is presented to the user in step 406. The user may select content of the data for presenting as an object to be edited by clicking on or selecting an area. The system executes step 408 to take the object clicked on by the user or the area selected by the user as the data for editing specified in the edit instruction.

Step 408, the docbase is searched for the data for editing specified in the edit instruction.

In this step, the data for editing may be searched for according to the index of the data for editing specified in the edit instruction.

Step 409, the sub-data of the data for editing found in step 406 is searched for a software linkage corresponding to the data for editing.

In this step, the data packets of the data for editing may be searched for the data header. Since the data header in the data packets includes the sub-data of the data for editing, i.e. the index of the data for presenting corresponding to the data for editing and the software linkage corresponding to the data for editing, the software linkage corresponding to the data for editing can be obtained from the data header.

In addition, if no software linkage which links to a software allowed to edit the data for editing is found, prompt information may be returned to the user to notify the user that the system does not install the software and cannot edit.

Step 410, the software corresponding to the software linkage found in step 406 is called. The software corresponding to the data for editing is the software which is configured in advance and is allowed to edit the data for editing.

The software allowed to edit the data for editing may be registered in advance for the data for editing. Or, the software may be searched for based on a file suffix name. For example, a file with a suffix name of DOC can only be edited by WORD software.

Alternatively, a plug-in may be adopted to take the software allowed to edit the data for editing as a plug-in for editing the data for editing.

Or, the name or address of the software may be specified in the edit instruction, and the software may be searched for based on the content of the edit instruction.

Step 411, the data for editing found in step 406 is edited by the software called.

Step 412, a save instruction is received.

Step 413, the data for editing is replaced with the data for editing edited in step 409.

Step 414, new data for presenting is generated according to the data for editing edited in step 409.

Step 415, original data for presenting is replaced with the new data for presenting generated in step 412. The original data for presenting refers to the data for presenting corresponding to the data for editing before being edited in step 409.

Steps 413-415 realize the update of the data for editing and the data for presenting. For example, the data for editing before being edited is a word "me", and the content of the data for presenting before the edit is also the word "me". After step 409, the data for editing is edited to become the word "us", whereas the contents of the stored data for editing and the data for presenting are still "me". Therefore, there is the need to update the data for presenting and the data for editing at the same time.

The original data for editing "me" is replaced with the data for editing "us" and is stored. The data for presenting "us" is generated according to the data for editing "us", and the original data for presenting "me" is replaced with the data for presenting "us" and is stored. The generation of the data for presenting from the data for editing may be implemented by a virtual printing apparatus. After receiving the save instruction, the virtual printing apparatus is started up to convert the data for editing into the data for presenting.

Thus, the data for editing at the node stored in the docbase is "us" and corresponding data for presenting is also "us". The modification to the data for presenting is realized.

The method for editing an electronic file provided by embodiments of the present invention will be described hereinafter in further detail by taking video files or audio files as exemplary file for presenting and file for editing.

### Embodiment three

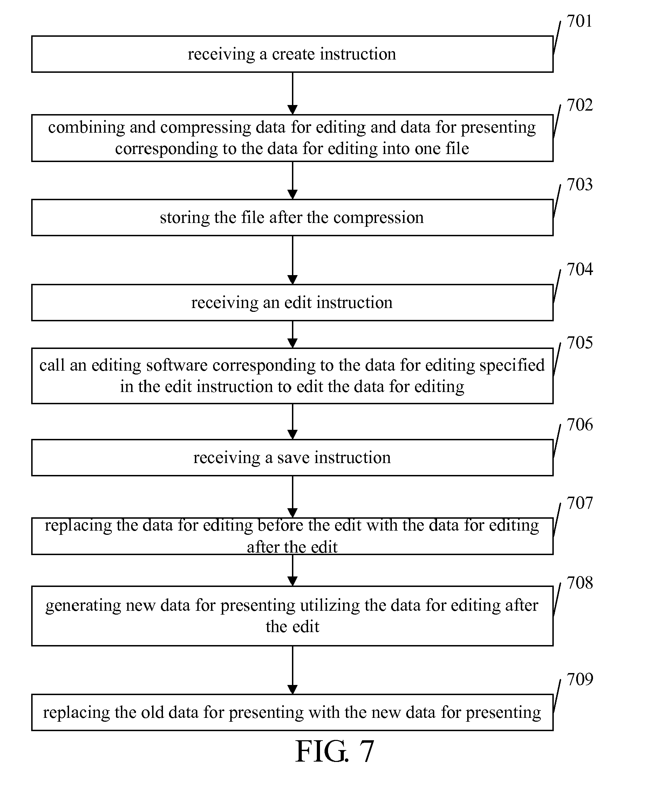

**FIG.7** is a flowchart illustrating a method according to an embodiment of the present invention. As shown in **FIG.7**, the method may include steps as follow.

Step 701, a create instruction is received.

Step 702, data for editing and data for presenting corresponding to the data for editing are combined and compressed into one file.

When the data is audio data, music information played by different musical instruments (or of different voice parts) may be divided and stored into different audio data for editing. The data for editing is combined to form data for presenting and then the audio data for editing and the data for presenting are combined to form mixed data.

If the data is video data, multiple video data for editing is combined to form the data for presenting, and the video data for editing and the data for presenting are combined to form mixed data. Herein, the multiple video data for editing may be respectively corresponding to different parts of a scene replayed, e.g. a background scene, a character scene, caption information, etc., or corresponding to programs for different time periods.

If the data is audio and video data, the data may be processed according to the above manners respectively with respect to the audio data and the video data.

Step 703, the compressed data is stored.

Step 704, an edit instruction is received.

Step 705, the software corresponding to the data for editing specified in the edit instruction is called to edit the data for editing.

The detailed procedure may be as follows: when music of a musical instrument (or a voice part) in the audio compound data or the audio and video compound data is to be edited, the data for editing is found out and modified.

When information of a scene (or of a certain type) in the video compound data or the audio and video compound data is to be edited, the data for editing is found out and modified.

Step 706, a save instruction is received.

Step 707, the data for editing before being edited is replaced with the data for editing after the edit.

Step 708, new data for presenting is generated using the data for editing after the edit. In particular, new data for presenting is generated using the audio/video/audio and video data for editing after the edit.

Step 709, the original data for presenting is replaced with the new data for presenting. The original data for presenting is the data for presenting corresponding to the data for editing before the edit.

In addition, after step 703, a present instruction may be received. The software corresponding to the data for presenting specified in the presence instruction may be called to present the data for presenting for the user. For example, the data for presenting in an SWF file may be displayed by a FLASH playing software. After the data for presenting is presented for the user, step 704 will be executed.

Thus, when the user listens to or watches the audio and video file for presenting, if somewhere needs to be modified, the part of the file for editing corresponding to information to be modified can be positioned quickly and modified. Finally, the file for presenting is updated according to the modified part of the file for editing.

It can be seen from the above solution that, in the method provided by the embodiments of the present invention, the data for editing and corresponding data for presenting are stored dependently. The data for editing is edited when editing is required and the data for editing after the edit is saved when it is required to be saved. And the data for editing after the edit is converted into new data for presenting to replace the original data for presenting. Thus, the update of the data for presenting is realized through editing the data for editing. And the modification to the file for presenting is implemented.

In addition, when there is no need to edit the data for editing, only the data for presenting is presented, which inherits the merits of constant presentation effect of the data for presenting. The content and form of a file can be kept constant in any computers. The method provided by the embodiments of the present invention is applicable for documents, video files and audio files, etc., and can be widely adopted.

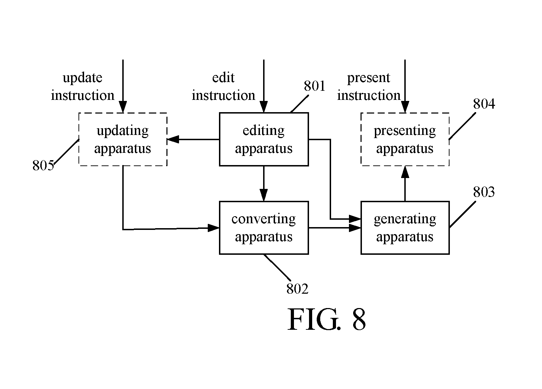

With respect to the above method, embodiments of the present invention also provide a system for processing electronic data. As shown in **FIG.8**, the system includes an editing apparatus 801, a converting apparatus 802 and a generating apparatus 803.

The editing apparatus 801 is adapted to edit and generate data for editing. The converting apparatus 802 is adapted to convert the data for editing generated by the editing apparatus 801 into data for presenting. And the generating apparatus 803 is adapted generate mixed data including the data for editing and the data for presenting which are stored dependently.

In practical applications, the system may further include:
a presenting apparatus 804, adapted to receive a present instruction, present all or part of the data for presenting in the mixed data utilizing a presenting software.

In practical applications, the system may further include:
an updating apparatus 805, adapted receive an update instruction, generate new data for presenting corresponding to the new data for editing after the edit, update the data for editing in the mixed data with the new data for editing, and update the data for presenting in the mixed data with the new data for presenting. The generating of the data for editing, the converting of the data for editing into the data for presenting, the dependent storing of the data for editing and the data for presenting, the presenting of the data for presenting by the presenting software and the updating of the data for editing and the data for presenting can be obtained by referring to the method described above, thus no further description will be given herein.

The foregoing descriptions are only preferred embodiments of this invention and are not for use in limiting the protection scope thereof. Any changes and modifications can be made by those skilled in the art without departing from the spirit of this invention and therefore should be covered within the protection scope as set by the appended claims.

## Claims

1. A method for processing electronic data, comprising:
receiving a create instruction, dependently storing data for editing specified in the create instruction and data for presenting corresponding to the data for editing to form mixed data.

2. The method of claim 1, wherein difference between presenting effects of the data for editing and the data for presenting is smaller than a threshold.

3. The method of claim 2, wherein the data for presenting is generated based on the data for editing.

4. The method of claim 3, wherein generating the data for presenting based on the data for editing comprises: generating, by an editing software, the data for presenting when editing the data for editing; or, converting, by a converting software, the data for editing into the data for presenting.

5. The method of claim 1, wherein dependently storing the data for editing and the data for presenting corresponding to the data for editing comprises:
storing the data for editing and the data for presenting into the same file; or
storing the data for editing and the data for presenting into the same database; or
storing the data for editing and the data for presenting in storage positions having an pre-defined relationship; or
storing storage positions of the data for editing and the data for presenting dependently.

6. The method of claim 5, wherein storing the data for editing and the corresponding data for presenting in the same file comprises:
embedding the data for editing into the data for presenting; or
embedding the data for presenting into the data for editing; or
combining the data for editing and the data for presenting to generate a new file; or
embedding the data for editing and the data for presenting into another file at the same time.

7. The method of claim 6, wherein embedding the data for editing and the data for presenting into another file at the same time comprises: embedding the data for editing and the data for presenting into a compressed file at the same time.

8. The method of claim 5, wherein storing the data for editing and the data for presenting into the same database comprises:
storing the data for editing and the data for presenting into different fields of the same record in the database respectively; or, storing the data for editing and the data for presenting in different records having the same keyword in the database.

9. The method of claim 5, wherein storing the data for editing and the data for presenting in storage positions having a pre-defined relationship comprises:
storing the data for editing and the data for presenting in the same file directory; or
storing the data for editing and the data for presenting in different file directories pre-defined; or
configuring the same part in file names of the data for editing and the data for presenting after the data for editing and the data for presenting are stored.

10. The method of claim 5, wherein storing storage positions of the data for editing and the data for presenting dependently comprises:
recording the storage positions of the data for editing and the data for presenting in the same file; or
recording the storage positions of the data for editing and the data for presenting in the same database.

11. The method of claim 1, further comprising:
receiving a present instruction after the mixed data is formed, presenting all or part of the data for presenting in the mixed data utilizing a presenting software.

12. The method of claim 11, wherein presenting all or part of the data for presenting in the mixed data utilizing presenting software comprises:
saving all or part of the data for presenting needed to be presented as a temporary file, and opening the temporary file utilizing the presenting software.

13. The method of claim 11, wherein the presenting software is selected according to the type of the data for presenting, or is designated in advance, or is specified in the presence instruction, or is registered in advance, or is selected according to system configurations.

14. The method of claim 1, further comprising: receiving an edit instruction, and editing all or part of the data for editing in the mixed data utilizing an editing software.

15. The method of claim 14, wherein editing all or part of the data for editing in the mixed data utilizing the editing software comprises:
saving all or part of the data for editing needed to be edited as a temporary file, and opening the temporary file utilizing the editing software.

16. The method of claim 14, wherein the editing software is selected according to the type of the data for editing, or is designated in advance, or is specified in the edit instruction, or is registered in advance, or is selected according to system configurations.

17. The method of claim 14, further comprising:
receiving an update instruction after editing all or part of the data for editing in the mixed data utilizing the editing software, generating new data for presenting corresponding to new data for editing after the edit, updating the data for editing in the mixed data with the new data for editing, and updating the data for presenting in the mixed data with the new data for presenting.

18. The method of claim 17, wherein updating the data for editing in the mixed data with the new data for editing comprises: only updating part of the data for editing which comprises modifications in the mixed data;
and/or
wherein updating the data for presenting in the mixed data with the new data for presenting comprises: only updating part of the data for presenting which comprises modifications in the mixed data.

19. The method of anyone of claims 1 to 18, wherein the data for presenting comprises multiple parts and at least one part of the data for presenting has corresponding data for editing.

20. The method of anyone of claims 1 to 18, wherein the data for editing and the data for presenting comprise:
anyone or any combination of two-dimensional static information, audio information and video information.

21. The method of claim 20, wherein the two-dimensional static information in the data for presenting comprises: layout document data and image data; the audio information in the data for presenting comprises: MP3 data, or WAV data or SWF data; and the video information in the data for presenting comprises: MPEG data or AVS data.

22. The method of claim 21, wherein the layout document data comprises one of: PDF data, SEP data, CEB data, WDL data, XPS data, and document data accessible via a docbase interface standard; the image data comprises one of: TIF data, GIF data, PNG data, BMP data, JPEG data, JPEG 2000 data, JBIG data, and JBIG 2 data.

23. The method of claim 22, wherein the docbase interface standard is UOML standard.

24. The method of anyone of claims 1 to 18, wherein the two-dimensional static information in the data for editing comprises one of: Office document data, CAD data, map data; the video information in the data for editing comprises FLA data; the audio information in the data for editing comprises MIDI data.

25. The method of anyone of claims 1 to 18, wherein the data for presenting is document data conforming to a docbase standard and the data for editing is embedded in the data for presenting.

26. The method of claim 25, wherein embedding the data for editing in the data for presenting comprises:
storing the data for editing as one or more objects of the data for presenting.

27. The method of claim 26, wherein the data for editing object is corresponding to one of: a document, a page, a layer, an object flow, and a layout object of the data for presenting.

28. The method of claim 26, wherein one object for data for editing is corresponding to one layer of the data for presenting; the method further comprises: deleting all objects corresponding to the layer of the data for presenting corresponding to the object when updating the mixed data after the data for editing corresponding to the object is edited, embedding the data for editing after the edit, and creating an object in the layer of the data for presenting according to the data for editing.

29. The method of anyone of claims 1 to 18, wherein the data for presenting is unstructured data accessible via a docbase interface standard.

30. The method of claim 29, wherein the docbase interface standard is an interface standard which application software uses for accessing a platform software, the platform software is adapted to receive an instruction which is for an operation on the unstructured data and conforms to the docbase interface standard from the application software, and the platform software is adapted to perform the operation according to the instruction.

31. The method of claim 29, wherein the unstructured data comprises stream media information or paper document information.

32. The method of claim 30, wherein the instruction describes an operation on an instance of a pre-defined model, the instruction is sent by the application software by:
the application software transmitting a cluster of commands to the platform software or
the application software calling a function provided by the platform software.

33. A system for processing electronic data, comprising: an editing apparatus, a converting apparatus and a generating apparatus; wherein
the editing apparatus is adapted to edit and generate data for editing;
the converting apparatus is adapted to convert the data for editing generated by the editing apparatus into data for presenting; and
the generating apparatus is adapted to generating mixed data including the data for editing and the data for presenting which are stored dependently.

34. The system of claim 33, further comprising:
a presenting apparatus, adapted to receive a present instruction, and present all or part of the data for presenting in the mixed data utilizing a presenting software.

35. The system of claim 33 or 34, further comprising:
an updating apparatus, adapted to receive an update instruction, generate new data for presenting corresponding to new data for editing after the edit, update the data for editing in the mixed data with the new data for editing, and update the data for presenting in the mixed data with the new data for presenting.
